Europäisches Patentamt

**European Patent Office**

**Office européen des brevets**

(19)

(11) Publication number: **0 382 140**
**A2**

(12) **EUROPEAN PATENT APPLICATION**

(21) Application number: **90102218.6**

(22) Date of filing: **05.02.90**

(51) Int. Cl.⁵: **B01F 3/08, B01F 5/00**

(30) Priority: **09.02.89 JP 28648/89**

(43) Date of publication of application:
**16.08.90 Bulletin 90/33**

(84) Designated Contracting States:
**AT CH DE FR GB IT LI NL SE**

(71) Applicant: **Kabushiki Kaisha Iseki Kaihatsu Koki**
**31-6, Yoyogi 4-chome**
**Shibuya-ku Tokyo(JP)**

(72) Inventor: **Okamoto, Sohei**
**3-13-2, Sakai**
**Musashino-shi, Tokyo(JP)**
Inventor: **Aoyagi, Yoshiharu**
**1-22-12, Takenotsuka, Adachi-ku**
**Tokyo(JP)**

(74) Representative: **von Samson-Himmelstjerna, Friedrich R. Dipl.-Phys. et al**
**Samson & Bülow Widenmayerstrasse 5/I**
**D-8000 München 22(DE)**

(54) **Method and apparatus for mixing liquid and coagulant.**

(57) An apparatus for mixing liquid and coagulant comprising: a body (16) having an internal space of circular section, the internal space extending in the direction which intersects a horizontal line; first introducing means (58, 72) for introducing the liquid into the body; second introducing means (64, 72) for introducing the coagulant into the body; receiving means (42) disposed inside the body so as to receive the liquid and the coagulant from the first and second introducing means; and drive means (28, 34) for rotating the receiving means about the axis (32) of the body. The receiving means is provided with a disk (42) disposed to intersect the axis of the body and rotated about the axis of the body by the drive means.

FIG. IA

## Method and Apparatus for Mixing Liquid and Coagulant

### BACKGROUND OF THE INVENTION

Field of the Invention:

This invention relates to a method and an apparatus for mixing a liquid containing solid substance such as fine grains and a coagulant for the solid substance and, more particularly, to a mixing method and apparatus suitable for a method and an apparatus for cohering the fine grains by adding a coagulant to a liquid containing said fine grains.

Description of the Prior Art:

As a method for removing fine grains in muddy water caused in excavating tunnels, boring, hammering piles, removing deposits from dams and the like, a treating method for forming flocks by adding a coagulant to the muddy water to be treated is put in operation. This treating method requires to mix the liquid containing fine grains and the coagulant for the fine grains.

As apparatuses for mixing the liquid and the coagulant in this type of treating method; there are one using a tank and another using a pipe to transfer the liquid.

In the former, however, processes of mixing new liquid and coagulant should be repeated after replacing the mixture of the liquid and the coagulant inside the tank, so that it cannot treat the liquid continuously.

In the latter, too, the liquid and the coagulant are not agitated or stirred, so that there is no mixing homogenously. As a result, it takes a long time for flocks to generate.

### SUMMARY OF THE INVENTION

It is an object of the present invention to provide a method and an apparatus for mixing a liquid and a coagulant, wherein the liquid and the coagulant can be treated continuously and mixed up homogenously.

The method for mixing the liquid and the coagulant according to the present invention includes a step of dispersing said liquid and said coagulant toward the inner surface of a body having an internal space of circlar section, said internal space extending in the direction to intersect a horizontal line; whereby said liquid and said coagulant are mixed.

The liquid and the coagulant are dispersed toward the inner surface of the body at the same time or in order and mixed at the time or the position of dispersion. The mixture of the liquid and the coagulant flows down along the inner surface of the body, so that, according to the mixing method of the present invention, the liquid and the coagulant can be surely mixed. Also, since the mixture of the liquid and the coagulant flows down inside the body, the liquid can be continuously treated.

The apparatus for mixing liquid and coagulant of the present invention comprises: a body having an internal space of a circular section, said internal space extending in a direction intersecting a horizontal line; first introducing means for introducing said liquid into said body; second introducing means for introducing said coagulant into said body; receiving means disposed inside said body for receiving said liquid and said coagulant from said first and second introducing means; and drive means for rotating the receiving means about the axis of said body, wherein said receiving means has a disk rotated about the axis of said body by said drive means.

In the above-mentioned mixing apparatus, the liquid and the coagulant introduced into the body by the introducing means are mixed by being dispersed outward in the radial direction of the disk along with the rotation of said disk. Thereby, according to the mixing apparatus of the present invention, the liquid and the coagulant can be surely mixed. Also, the mixture of the liquid and the coagulant flows down inside the body, whereby the liquid can be continuously treated.

Instead of receiving both liquid and coagulant by single receiving means, the apparatus can be so constructed as to receive one of the liquid and the coagulant introduced by the first introducing means and the other by the second receiving means disposed lower than the height of the first receiving means. In this case, each of the first and second receiving means is preferably provided with a disk disposed inside the body so as to intersect the axis of the body and rotates both disks by a drive mechanism.

In a mixing apparatus comprising first and second receiving means, one of liquid and coagulant is dispersed outwardly in the radial direction of the disk by the disk of the first receiving means, and the other by the disk of the second receiving means, respectively along with the rotation of the corresponding disk. When one of the liquid and the coagulant flows down along the inner surface of the body in a form of film along the inner surface of the body, the other is dispersed, whereby the liquid and the coagulant are mixed. As a result, according to a mixing apparatus comprising first and second receiving means, the liquid and the coagulant can be surely mixed.

Further, each of the first and second receiving means is preferably provided with a rib disposed on the upper surface of the disk so as to extend in the radial direction of the disk. Thereby, the liquid and the coagulant are dispersed toward the inner surface of the body by the corresponding ribs along with the corresponding disks.

When the rib is provided in each disk, the liquid and the coagulant are surely dispersed by the corresponding disk even if the liquid and the coagulant are led onto the central portion of the corresponding disk by corresponding introducing means.

Further, the apparatus is also preferable to comprise: a first watercourse for receiving the mixture of said liquid and said coagulant flowing downward along the inner surface of said body and for leading the mixture so as to flow further downward; a second watercourse for leading said mixture, which has flowed downward along the interior of said first watercourse, so as to flow from downward to upward inside said first watercourse; and a third watercourse for leading said mixture, which has flowed upward in the second watercourse, so as to flow downward inside said second watercourse. Thereby, each watercourse can be used as part of a reaction chamber of the coagulant and fine grains contained in the liquid.

Still further, it is possible to comprise: third introducing means for introducing another coagulant of a kind different from the initial coagulant to a third position lower than the height position of said second position inside the body: and third receiving means disposed spaced apart in the downward axial direction of the body from the second receiving means so as to receive the another coagulant introduced by the third introducing means. In this case, the third receiving means is provided with a disk disposed so as to intersect the axis of the body, and the disk is rotated about the axis of the body by a drive mechanism.

Further, it is also possible to comprise auxiliary means provided in the body so as to introduce another coagulant or another liquid of a kind different from one of the initial liquid and the initial coagulant introduced by the first introducing means. It is also possible to comprise auxiliary means for introducing onto the second circular plate another coagulant or another liquid of a kind different from the other of the initial liquid and the initial coagulant introduced by the second introducing means.

BRIEF DESCRIPTION OF THE DRAWINGS

The foregoing and other objects and features of the invention will become apparent from the following description of preferred embodiments of the invention with reference to the accompanying drawings, in which:

Figs. 1A and 1B are longitudinal sections showing an embodiment of the liiquid treating equipment provided with a mixing apparatus of the present invention, and the lower end of Fig. 1A is continued on the upper end of Fig. 1B;

Fig. 2 is an enlarged section taken along the line 2-2 of Fig. 1A;

Fig. 3 is an enlarged section taken along the line 3-3 of Fig. 1B: and

Fig. 4 is an enlarged section of a filter.

DESCRIPTION OF THE PREFERRED EMBODIMENTS

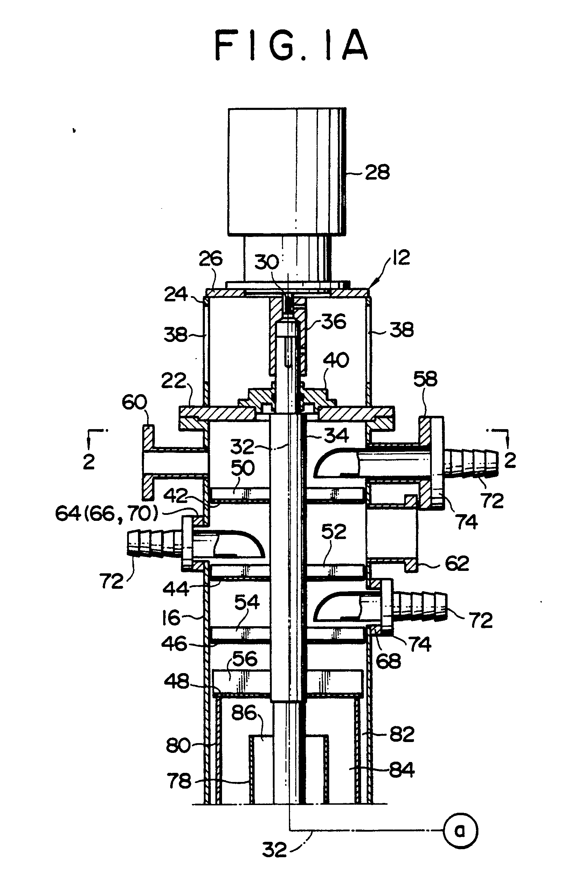

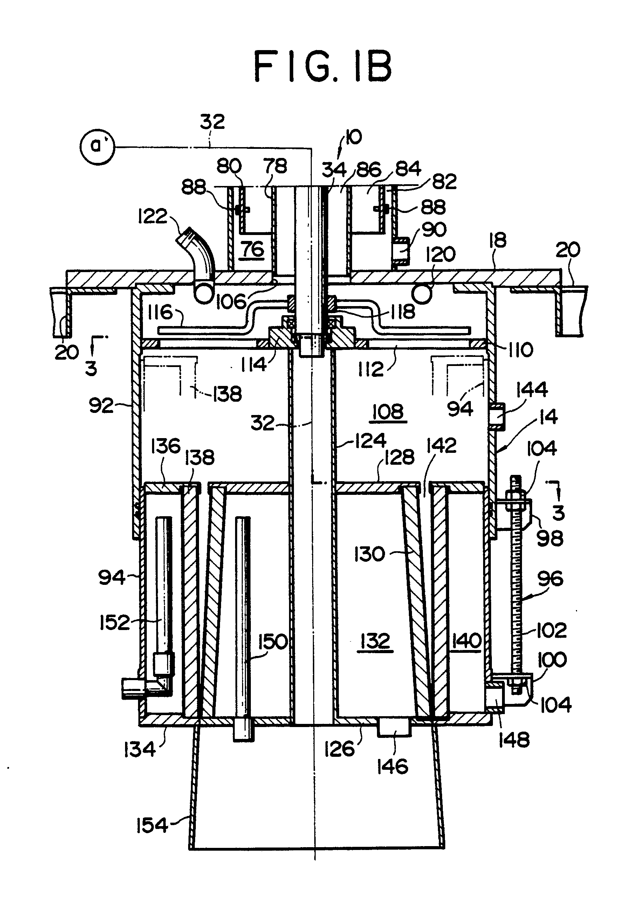

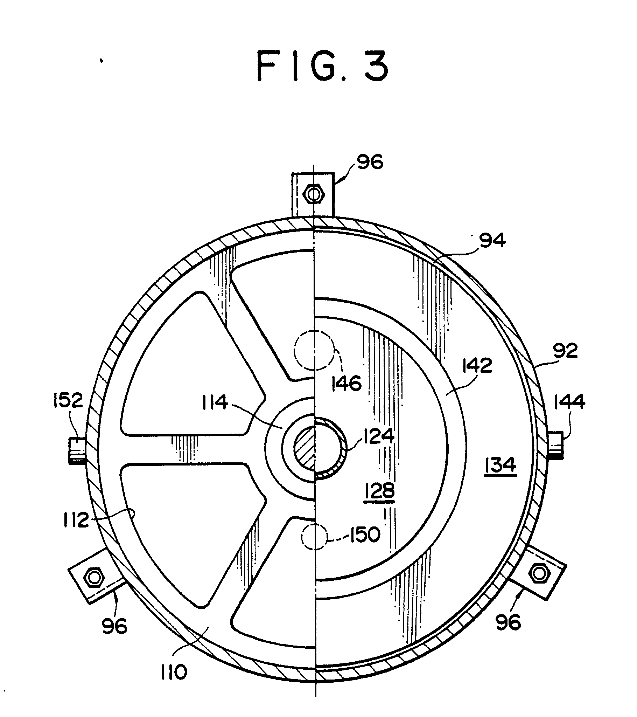

With reference to Figs. 1 through 3, these drawings show a liquid, treating equipment 10 which forms flocks by cohering fine grains contained in the liquid such as muddy water with various kinds of coagulants. and then separates the liquid and the flocks. The liquid treating equipment 10 comprises: a mixing apparatus 12 of the present invention which forms flocks by mixing the liquid and the coagulant, and a solid-liquid separating apparatus 14 for separating the liquid and the flocks. The mixing apparatus of the present invention, however, can be used together with another solid-liquid separating apparatus.

The mixing apparatus 12 comprises a tubular body 16. The body 16 is mounted on a support base 18 so as to extend upward from the support base 18. The support base 18 is maintained at a predetermined height from the ground by a frame 20.

The body 16 supports a disk-like first plate 22 which closes the upper end portion of the internal space of the body 16. The first plate 22 is mounted removably on the upper end of the body 16 by bolts or the like. A tubular cover 24 is fixed on the upper side of the first plate 22 so as to extend upward, and a support plate 26 is removably mounted on the upper end of the cover 24.

A rotary source 28 such as a motor is installed on the upper side of the second plate 26 such that the output shaft 30 of the rotary source extends into a cover 24 through a hole formed in the second plate 26. The output shaft 30 is connected by a coupler 36 with a shaft 34 which extends inside the body 16 and the cover 24 in the vertical direction along the axis 32 of the body 16 inside the body 16. The cover 24 has a plurality of holes 38 utilized in connecting the output shaft 30 and the shaft 34. A bearing case 40 is mounted on the first plate 22, and a bearing for receiving rotatably the upper portion of the shaft 34 is disposed inside the bearing case 40.

Disks 42, 44, 46, 48 are disposed inside the body 16 so as to intersect the axis 32 at right angles. The disks 42, 44, 46, 48 have a diameter a little smaller than the inner diameter of the body 16, and are fixed to the shaft 34 so as to be spaced apart from each other in the axial direction on the upper portion inside the body 16. Ribs 50, 52, 54 and 56 extending in the radial direction of the corresponding disks are respectively mounted on the upper surfaces of the disks 42, 44, 46 and 48. Ribs 50, 52, 54, and 56 can be dispensed with.

The body 16 is provided with mounting portions 58, 60, 62, 64, 66, 68, 70 for nozzles. The mounting portions 58, 60 are provided to open at the spaces between the first plate 22 and the disk 42; the mounting portions 62, 64, 66, 70 to open at the space between the disks 42 and 44; and the mounting portion 68 to open at the space between the circular plates 44 and 46, respectively.

Each of some mounting portions are utilized to removably mount a predetermined nozzle 72 when treating the liquid according to the properties of the liquid and the coagulant to be used, but the other mounting portions are closed. Therefore, the least number of mounting portions is only two that are required to introduce the liquid and the coagulant separately into the body.

Each nozzle 72 is removably mounted on the predetermined mounting portion at a flange portion 74 which is provided at the nozzle so as to guide liquid, coagulant or water to be introduced into the body 16 to the central portion of the corresponding disk.

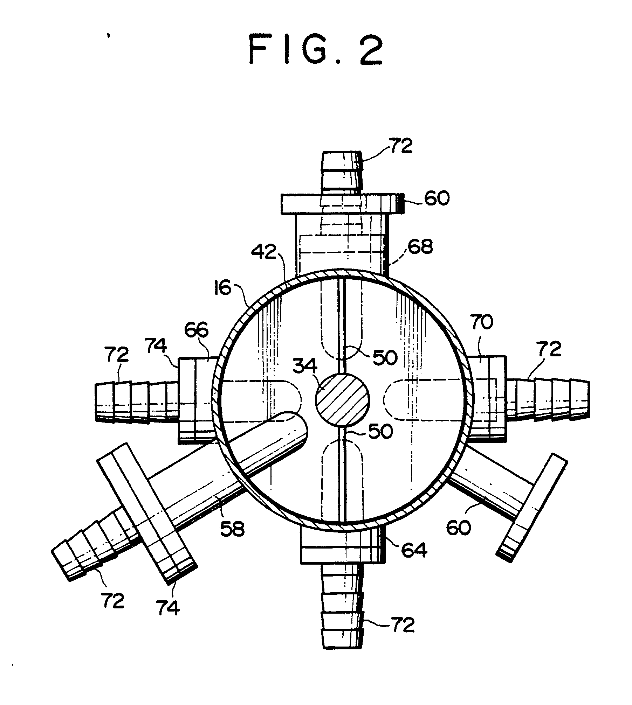

Fig. 1 is drawn to show the positional relation among respective mounting portions in the vertical direction, while Fig. 2 is drawn to show the positional relation among the respective mounting portions about the axis 32.

The reaction chamber 76 is formed at the lower portion inside the body 16. The reaction chamber 76 is defined by the support base 18 and a tubular first guide 78 extending upward from the support base 18 along the periphery of the shaft 34. The reaction chamber 76 also includes the first watercourse 82 defined by the second guide 80 and the body 16, the second guide 80 being disposed spaced apart around the guide 78; the second watercourse 84 defined by the first and second guides 78 and 80; and the third watrcourse 86 where mixture overflowing from the second watercourse flows downward. The second guide 80 is fixed at the disk 48 disposed at the lowermost portion. The first and second watercourses 80, 82 are communicated with each other at their lower portions.

A plurality of mixing members 88 are disposed at the lower portion of the second guide 80, the mixing members 88 affording stirring action to the mixture in the reaction chamber 76. The mixing members 88 in the illustrated embodiment consist of a bolt screwed to the second guide 80, but other members will do.

A port 90 communicated with the bottom of the reaction chamber 76 is provided at the bottom of the body 16. The port 90 is usually closed, but opened at the time of maintenance and overhauling to exhaust the liquid and solids inside the reaction chamber 76.

The solid-liquid separating apparatus 14 comprises a tubular first casing 92 disposed at the lower side of the support base 18 and about the axis 32, and a second casing 94 fitted slidably and liquid-tightly in the vertical direction inside the first casing 92. The first casing 92 is mounted on the lower end of the support base 18 by bolts and the like. On the other hand, the second casing 94 is supported by the first casing 92 through a plurality of position adjusting mechanisms 96.

Each position adjusting mechanism 96 comprises: a first support metal fitting 98 attached to the first casing 92; a second support metal fitting 100 attached to the second casing 94 so as to oppose the first support metal fitting 98; a screw rod 102 extending through both the metal fittings 98, 100; and a plurality of nuts 104 screwed to the screw rod.

Also, each position adjusting mechanism 96 is capable of adjusting the relative positions of a nut 104 disposed in the upper portion and a nut 104 disposed in the lower portion, that is to say, the position in the vertical direction of the second casing 94 relative to the first casing 92, by adjusting the positions of both nuts 104 relative to a screw rod 102. The position of the second casing 94 relative to the first casing 92, in the illustrated embodiment, can be adjusted between the position indicated by a solid line and that indicated by a two-dot chain line.

The space inside the first casing 92 is communicated with the first guide 78 through a hole 106 formed in the support base 18, and can serve as a reservoir 108 for reserving a liquid containing solids like flocks.

A disk 110 fixed to the first casing 92 is disposed at the upper portion of the reservoir 108. The disk 110 has a plurality of holes 112 which permit the liquid to flow, and a hole into which a bearing case 114 is fitted. A bearing receiving the lower end portion of the shaft 34 is disposed inside the bearing case 114 so as to rotate about the axis 32. The shaft 34 is maintained such that its rotary axis coincides with the axis 32 by the bearing inside the bearing case 114 and the bearing inside above-mentioned bearing case 40.

A plurality of bars 114 which afford stirring action to the liquid inside the reservoir 108 are disposed at the upper portion of the disk 110. A bar 116 is mounted on the shaft 34 by a ring 118 so as to extend in the radial direction of the first casing 92 inside the reservoir 108.

A pipe 120 is disposed on the top portion of the reservoir 108. The pipe 120 is curved like a ring and fixed at the lower surface of the support base 18 so as to extend about the shaft 34. One end of the pipe 120 is closed, while the other end portion is connected to a nipple 122 extending through the support base 18 toward the upper portion thereof. A gas such as air or a liquid such as water is supplied into the nipple 122. Therefore, a plurality of holes are formed in the pipe 120 to permit the gas or liquid to flow into the reservoir 108.

A support tube 124 is fixed at the bearing case 114. The support tube 124 extends downward along the axis 32 from the bearing case 114 such that the axis of the support tube 12 coincides with the axis 32. A disk-like plate 126 is fixed at the lower end of the support 124. A disk-like plate 128 is also fixed at a position spaced apart upward from the plate 126 of the support tube 124 to oppose the plate 126. The plate 128 has a diametral dimension a little smaller than that of the plate 126.

A tubular first filter 130 is fixed at the outer peripheral edge portions of the plates 126, 128, The first filter 130 is so disposed as to define a first chamber 132 together with the support tube 124 and the plates 126, 128.

Annular plates 134 and 136 are fixed respectively at the upper and lower end portions of the second casing 94. A tubular second filter 138 is attached to the inner peripheral edge portion of the plates 134, 136 so as to define a second chamber 140 together with the second casing 94 and both the plates 134, 136. The second filter 138 is so disposed as to define the liquid receiving chamber 142 betweem both the filters in cooperation with the first filter 130.

The liquid receiving chamber 142 has a V-shaped sectional configuration. Because of this, in the illustrated embodiment, the outer diametral dimension of the first filter 130 gradually decreases from upward to downward, while the inner diametral dimension of the second filter 138 is the same at every portion in the vertical direction. It is possible, however, to make the inner diametral dimension of the first filter 130 same at every portion in the vertical direction, and to make the inner diametral dimension of the second filter 138 gradually decrease from upward to downward. Also, the outer diametral dimension of the first filter 130 may gradually decrease from upward to downward, and the inner diametral dimension of the second filter 138 may gradually increase from upper portion to lower portion.

The outer diametral dimension of the lower edge of the first filter 130, that of the plate 126, the inner diametral dimension of the lower edge of the second filter 138 and that of the plate 134 are selected to have such a value as to form a gap to permit the liquid receiving chamber 142 to communicate with lower regions of the plates 126, 134.

The reservoir 110 is communicated with the exterior by a port 144 formed in the casing 92, the first chamber 132 is communicated with the exterior by a port 146 formed in the plate 126, and the second chamber 140 is communicated with the exterior by a port 148 formed in the second casing 94. The port 144 is usually closed, but opened at the time of maintenance and control works. The ports 146, 148 are preferably communicated with a pump for draining.

Pipes 150, 152 are disposed at the first and second chambers 132, 140, said pipes permitting the liquid to flow out of the chambers when the liquid levels in the chambers exceed a predetermined level. A tubular member 154 is fixed at the lower side of the plate 134, said tubular member 154 coaxially extending toward the side opposite to the second filter 138. The tubular member 154 has an inner diametral dimension gradually increasing from upward to downward. The tubular member 154 has an inner diametral dimension gradually increasing from upward to downward. However, the inner diametral dimension of the upper end portion of the tubular member 154 is about the same as the outer diametral dimension of the lower edge of the first filter 130 and that of the plate 126.

At the time of treating the liquid, the rotary source 28 is rotated at a speed of about 1500 rpm. Thereby, the disks 50, 52, 54 and 56 are rotated through the shaft 34.

Under such a condition, for example, the liquid is supplied onto the plate 50 from the nozzle 72 mounted on the mounting portion 58, the first coagulant is supplied from the nozzle 72 mounted on the mounting portion 64, and the second coagulant is supplied from the nozzle 72 mounted on the mounting portion 68.

Therby, the liquid, dispersed forcibly into the inner surface of the body 16 by the rib and the rotation of the disk 50, flows down along the inner surface of the body 16 in the form of a thin film along the inner surface of the body 16. On the other hand, the first and second coagulants are dispersed by the rotations of the disks 52 and 54, respectively, and added to the liquid in order.

When the first and second coagulants are added to the liquid, they are added in the form of dispersion to the liquid flowing down like a thin film along the inner surface of the body 16, whereby the liquid and the coagulants are homogenously mixed.

If a rib is provided on each disk, the liquid and the coagulant are surely dispersed toward the inner surface of the body 16. However, even in case no rib is provided on the upper surface of a disk, the liquid and the coagulant are dispersed toward the interior of the body 16.

Part of the mixture of the liquid and the coagulant flows down along the inner surface of the body 16, while the rest of the mixture flows down onto the lower disk 56. However, the mixture which has flowed down onto the disk 56 is diffused like a thin film on the inner surface of the body 16 along with the rotation of the disk 56 and flows down to the reaction chamber 76.

The position in the body 16 to which the liquid and the coagulant are introduced varies depending on the properties of the liquid and the number and kind of the coagulants used. Consequently, for example. the liquid may be supplied from the position of the mounting portion 64 or a first coagulant may be supplied from the position of the mounting portion 58. Otherwise, a single coagulant may be added to the liquid, or more than three coagulants may be added to the liquid.

In case a plurality of coagulants are added to the liquid, they may be supplied from the position of the mounting portion disposed at the same height positions in the vertical direction in the body 16. It is preferable, however, to determine the positions for supplying the coagulants so that the coagulants may be added to the liquid in order.

The liquid and the coagulants may be supplied from the mounting portions. e. g., 58, 60 which are provided at the same height positions in the vertical direction in the body 16. In this case, the disks 52, 54, 56 are not necessary. However. if these circular plates are disposed below the disk 50, the mixture which has flowed down onto the disks 52, 54, 56 are dispersed on the inner surface of the body 16 along with the rotation of these disks, whereby the mixture is subjected to a mixing action similar to the mixing action by stirring, so that the liquid and the coagulants can be surely mixed.

Coagulants to be used may be a solution which is a mixture of coagulants and another liquid, or powder. In case a powdery coagulant is used, it can be supplied, for example, from the position of the mounting portion 62.

In case the density of the fine grains in the liquid is high, it is recommended, for example, to attach a nozzle to the mounting portion 60 to supply another liquid with a low density of fine grains from the nozzle and dilute the initial liquid. In this case, since the another liquid for dilution is dispersed like a thin film on the inner surface of the body 16 along with the rotation of the disk 50, the another liquid for dilution is homogenously mixed with the initial liquid.

The mixture which has flowed down to the reaction chamber 76 flows down through the first watercourse 82 and then goes upward through the second watercourse 84. During this process, the fine grains in the mixture grow to be flocks due to the coagulant. The mixture containing the flocks flows over the first guide 78, then through the third watercourse 86 and the hole 106, up to the reservoir 108 as a reacted mixture for the solid-liquid separating apparatus 14.

Since the flocks in the reacted mixture are mixed up in the reservoir 108 by the rotation of the bar 118, they grow further. However, the bar 118 is not necessarily provided.

The liquid in the reacted mixture flows from the reservoir 108 into the liquid receiving chamber 142 and passes through the first or the second filter 130, 138 to flow into the first and second chambers 132, 142 from which it passes through the port 146 or 148 to be exhausted.

On the other hand, with the flowing of the liquid into the liquid receiving chamber 142, the flocks in the reacted mixture flow into the same chamber 142, where they accumulate on the bottom. To insure the receiving of the flocks into the liquid receiving chamber 142, it is preferable to make the opening in the upper portion of the liquid receiving chamber 142 large.

Accumulated flocks are forced out of the spaces between the first and second filters 130, 138 and that between the plates 126, 134 by hydraulic pressure. The flocks forced out are prevented from diffusing by the tubular member 154.

When the quantity per unit hour of the flocks accumulated in the liquid receiving chamber 142 is smaller than the quantity per unit hour of the flocks forced out of the spaces between the first and second filters 130, 138 and that between the plates 126, 134, it suffices to increase the pressure in the reservoir 108 by supplying gas such as air or liquid such as water into the reservoir 108 through the nipple 122 and the pipe 120.

Instead of this, it may be recommendable to move the second filter 138 upward by a predetermined amount over the first filter 130 by the position adjusting mechanism 96 to enlarge the spaces between the first and second filters 130, 138 and that between the plates 126, 134. When the second filter 138 is moved upward by a predetermined amount over the first filter 130, the upper portion of the tubular member 154 opposes the lower portion of the first filter 130 and the outer periphery of the plate 126, so that even if the amount of movement of the second filter 130 is large, the amounts of change of the spaces between the first and second filters 130, 138 and that between the plates 126, 134 are small.

On the other hand, when the quantity per unit hour of the flocks accumulated in the liquid receiving chamber 142 is smaller than the quantity per unit hour of the liquid flowing into the first and second chambers 132, 140, it suffices to lower the pressure in the first and second chambers 132, 140 by forcibly draining the liquid in the first and second chambers 132, 140 by a pump and the like.

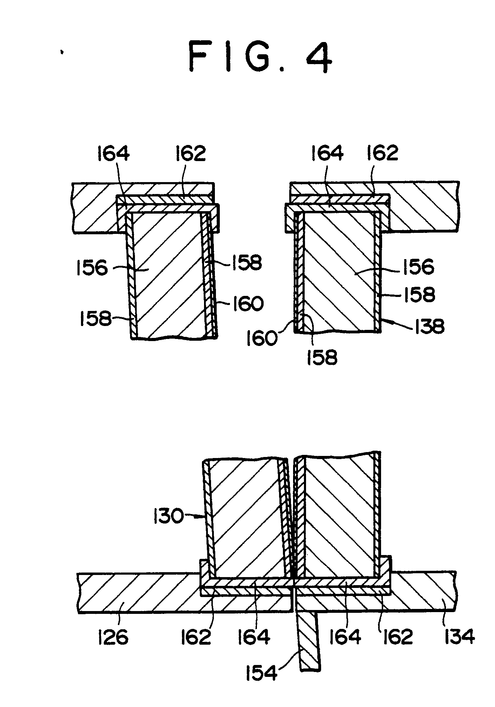

The first and second filters 130, 138 are shown enlarged in Fig. 4. Each filter 130, 138 includes a cylindrical sponge 156, a pair of metallic bodies 158 disposed in the inner and outer peripheral surfaces of the sponge; and a filter cloth 160 disposed on a surface opposite to the sponge 156 of one of the metallic bodies. The filter cloth 160 is disposed on the surface of the opposite side to the sponge 156 of the metallic body 158 disposed on the side of the liquid receiving chamber 142. The metallic body 158 is composed of a metallic plate such as stainless steel, and many holes are formed thereon.

Both the filters 130, 138 are attached to the plates 126, 128 or 134, 136 through a seal member 160 and a metal fitting 162.

According to the filters 130, 138 shown in Fig. 4, the sponges 156 absorb the fluid in the liquid receiving chamber 142 through the filter cloth 160 and the metallic body 158 disposed on the sponge on the side of the liquid receiving chamber 142, and the fluid absorbed by the sponge 156 flows into the first or second chamber 132, 140 under gravitation, so that the amount of flow of the fluid into the first and second chambers 130, 142 becomes great.

## Claims

1. A method for mixing liquid and coagulant comprising the step of:
dispersing said liquid and said coagulant on the inner surface of a body (16) having an internal space of circular section, said internal space extending in the direction which intersects a horizontal line; whereby said liquid and said coagulant are mixed.

2. An apparatus for mixing liquid and coagulant comprising:
a body (16) having an internal space of circular section, said internal space extending in the direction which intersects a horizontal line;
first introducing means (58, 72) for introducing said liquid into said body;
second introducing means (64, 72) for introducing said coagulant into said body;

receiving means (42) disposed inside said body so as to receive said liquid and said coagulant from said first and second introducing means; and
drive means (28, 34) for rotating the receiving means about the axis (32) of said body;
wherein said receiving means is provided with a disk (42) disposed to intersect the axis of said body and rotated about the axis of said body by said drive means.

3. An apparatus for mixing liquid and coagulant comprising:
a body (16) having an internal space of circular section, said internal space extending in the direction which intersects a horizontal line;
first introducing means (58, 72) for introducing one of said liquid and said congulant to a first position inside said body;
second introducing means (64, 72) for introducing the other of said liquid and said coagulant to a second position lower than the height position of said first position inside said body;
first receiving means (42) disposed inside said body so as to receive one of said liquid and said coagulant introduced by said first introducing means;
second receiving means (44) disposed inside said body so as to receive the other of said liquid and said coagulant introduced by said second introducing means; and
drive means (28, 34) for rotating said first and second receiving means about the axis of said body;
wherein each of said first and second receiving means is provided with a disk (42, 44) disposed to intersect the axis of said body and rotated about the axis of said body by said drive means.

4. A mixing apparatus as claimed in claim 3, wherein each of said first and second receiving means (42, 44) is further provided with a rib (50 or 52) disposed so as to extend in the radial direction of the disk on the upper surface of said disk.

5. A mixing apparatus claimed in claim 4, wherein each of said first and second introducing means (58, 72, 64, 72) is disposed so as to introduce corresponding one of said liquid and said coagulant on the central portion of said corresponding disk.

6. A mixing apparatus as claimed in claim 3, further comprising:
a first watercourse (82) for receiving the mixture of said liquid and said coagulant flowing downward along the inner surface of said body (16) and for leading said mixture so as to flow further downward;
a second watercourse (84) for leading said mixture, which has flowed down in the first watercourse, so as to flow inside said first watrcourse from downward to upward; and

a third watercourse (86) for leading said mixture, which has risen in the second watercourse, so as to flow downward inside said second watercourse.

7. A mixing apparatus as claimed in claim 3, further comprising:
third introducing means (68, 72) for introducing another coagulant to a third position lower than the height position of said second position inside said body; and
third receiving means (46) disposed spaced apart downward from said second receiving means in the axial direction of said internal space so as to receive said another coagulant introduced by the third introducing means;
wherein said third receiving means is provided with a disk (46) disposed to intersect the axis of said body and rotated about the axis of said body by said drive mechanism.

8. A mixing apparatus as claimed in claim 3, further comprising auxiliary introducing means (60, 72) provided at said body so as to introduce on said first receiving means at least one of another liquid and another coagulant.

9. A mixing apparatus as claimed in claim 3, further comprising auxiliary introducing means (62, 66, 68, 72) for introducing on said second receiving means at least one of another liquid and another coagulant.

EP 0 382 140 A2

# FIG. IA

# F I G. IB

# FIG. 2

# FIG. 3

# FIG. 4